# EUROPEAN PATENT SPECIFICATION

(11) **EP 2 531 828 B1**
(45) Date of publication and mention of the grant of the patent: **10.04.2019**
(21) Application number: 10704663.3
(22) Date of filing: 05.02.2010
(51) Int. Cl.: G01L 19/00, G01L 9/00

(54) **MEDIA-ISOLATED MEASUREMENTS OF PRESSURIZED MEDIA**
MEDIENISOLIERTE MESSUNGEN VON UNTER DRUCK STEHENDEN MEDIEN
MESURES D'UN MILIEU SOUS PRESSION ISOLÉES DU MILIEU

(43) Date of publication of application: 12.12.2012
(73) Proprietor: Honeywell International Inc., Morris Plains, NJ 07950 (US)
(72) Inventor: COOK, Jim, Freeport Illinois 61032 (US); TURNBULL, Frank, Larkhall, Lanarkshire ML91AS (IN); MARSH, Brian, Freeport Illinois 61032 (US); KUMAR, Sachin, Bangalore 560076 (IN)
(74) Representative: Houghton, Mark Phillip
(86) International application number: PCT/US2010/023406
(87) International publication number: WO 2011/096937

(56) References cited:
- EP-A2- 0 107 549
- US-A- 5 000 049
- US-A1- 2005 028 600
- US-A1- 2009 241 677

## Description

### BACKGROUND

A pressure sensor may provide useful feedback within a system that processes pressurized fluids or gases, which feedback may be used to control such processes. In some implementations, it may be desirable to physically isolate a pressure sensor from the media whose pressure is to be measured.

US5000049A discloses an apparatus for measuring fluid pressure in a passage or tube for use with medical apparatus such as balloon catheters. A diaphragm gauge is provided and includes a case which houses a first diaphragm, a translation mechanism connected to the first diaphragm and a pointer attached to the translation mechanism for providing readouts of fluid pressure. The diaphragm is coupled to a fluid passage, such that changes in fluid pressure cause the diaphragm to activate the translation mechanism, thus providing readouts by means of the pointer. A second diaphragm is provided for sealing the fluid passage from the first diaphragm, for preventing transfer of materials between the first diaphragm and the passage.

### SUMMARY

The present invention provides a system according to claim 1 of the appended claims.

In some implementations, a system includes a channel or vessel, a pressure sensor and a mounting mechanism. The channel or vessel can include a central region and an outer wall, and the outer wall can be configured to contain a pressurized fluid within the central region. The outer wall can include a wall portion that is deformable and incompressible and that has an inner surface adjacent the central region and an outer surface that is fluidly isolated from the central region. The pressure sensor can include (a) a pressure transducer that generates a signal representative of a magnitude of mechanical stress applied to the pressure transducer, the pressure transducer having a first surface area; (b) a pressure sensing face having a second surface area that is larger than the first surface area; and (c) a force concentrating mechanism that translates force applied to the pressure sensing face into mechanical stress on the pressure transducer. The mounting mechanism can push the pressure sensing face into intimate contact with the outer surface, thereby positively deforming the wall portion, such that the signal is further representative of a pressure of the pressurized fluid in the central region.

In some implementations, the mounting mechanism pushes the pressure sensing face into intimate contact with the outer surface such that more than 50% of the surface area of the sensing face is in physical contact with the outer surface of the outer wall. In some instances, the pressure sensor can be a surface acoustic wave (SAW) sensor. In particular, in some implementations, the pressure sensor is a quartz SAW sensor. The signal can, in some instances, include a static pressure component and a dynamic pressure component, but this is not required.

### BRIEF DESCRIPTION OF THE DRAWINGS

These and other aspects will now be described in detail with reference to the following drawings.
Figure 1 is a cross-section of an example channel through which a pressurized media can flow.
Figure 2A is a cross-section of an example force concentrator pressure sensor.
Figure 2B is a top view of the example force concentrator sensor that is shown in Figure 2A.
Figure 3 is a cross-section of an example mounting mechanism for positively forcing the sensing face of a force concentrator sensor into a media-isolation layer.
Figure 4 is a cross-section of another example mounting mechanism for positively forcing the sensing face of a force concentrator sensor into a portion of tubing.
Figure 5 is a diagram of an example sensor that is packaged in a threaded housing.
Figure 6 is a diagram of the example sensor shown in Figure 5, disposed in a corresponding hole that is bored and threaded in a gasket of a system.
Figure 7 is a graph that provides example data for a system that employed a quartz SAW sensor mounted in a rubber gasket like.

Like reference symbols in the various drawings indicate like elements

### DESCRIPTION

In some pressure-sensing applications, it may be desirable to physically isolate the pressure sensor from media whose pressure is to be measured. Described herein are various methods, systems and apparatus for measuring pressure of media, in a manner that isolates the pressure sensor from the media.

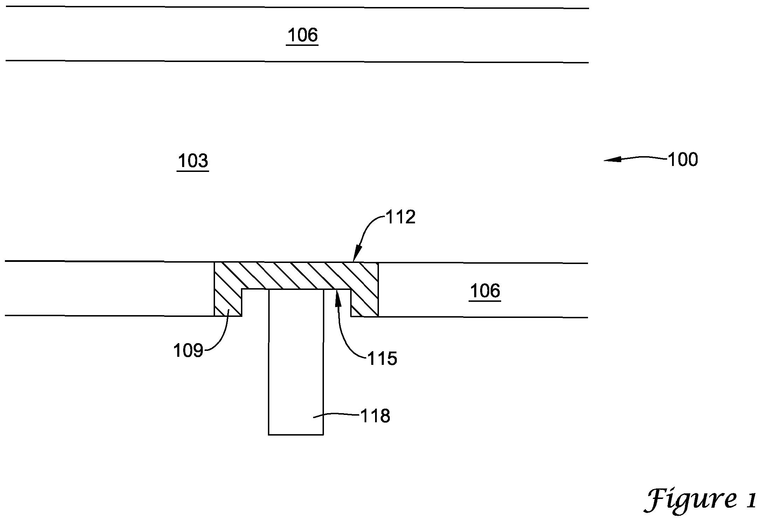

Figure 1 illustrates a cross-section of an example channel 100 through which a pressurized media can flow. In some implementations, the channel 100 is a pipe or tube through which a pressurized liquid or gas can be conveyed. For example, the channel 100 could be medical tubing that carries fluids within a medical application. As another example, the channel 100 could be a pipe that carries pressurized fluids or gases within an industrial application. As yet another example, the channel 100 could be piping that carries ingredients in a food or beverage application. Whatever the application, the example channel 100 may include a central region 103 for carrying pressurized media, and an outer wall 106 that contains the pressurized media within the central region 103. (Note that a channel through which a pressurized media can *flow* is used throughout this document for purposes of illustration; however, the concepts described herein apply in other contexts, such as in the context of a vessel in which a pressurized media may be present but not flow from one point to another.)

In some implementations, the outer wall 106 of the channel 100 is primarily constructed of a rigid material. For example, in industrial applications, the channel 100 may be constructed of steel, carbon steel, plastic and/or any other suitable material as desired. As another example, medical applications may employ polytetrafluoroethylene (PFTE) or other polymer-based tubing. As additional examples, food or beverage applications or pharmaceutical applications may employ a stainless steel channel 100.

In the example depicted in Figure 1, the outer wall 106 includes at least a media-isolating portion 109 that is deformable and, in some cases, incompressible. For example, the media-isolating portion 109 may be made from a silicone rubber. As other examples, the media-isolating portion 109 may be made from a thin metal, a plastic, a composite material, etc. The media-isolating portion 109 has an inner surface 112, which is adjacent to and in contact with the pressurized media in the central region 103; and an outer surface 115, which is physically isolated from the inner surface 112 and the central region 103. In some implementations, as will be described in greater detail, a pressure sensor 118 can be brought into intimate contact with the outer surface 115 of the media-isolating portion 109, such that the pressure sensor 118 can measure a pressure of the media inside the channel 100, through the media-isolating portion 109.

In implementations in which the pressure sensor 118 measures pressure through the media-isolating portion 109, the media-isolating portion 109 can physically (e.g., fluidly) isolate media in the central region 103 from the pressure sensor 118. Such isolation can be advantageous in various applications, such as, for example, applications in which the media being measured is corrosive (e.g., in industrial applications) or applications in which sanitary or sterility guidelines for the media (e.g., in food and beverage applications, or medical applications) require fluidic isolation from any sensing devices.

The deformable and/or incompressible nature of the media-isolating portion 109 can enable a pressure sensor 118 to sense "through" the portion. The term incompressible can mean incompressible or substantially incompressible. For example, and in some instances, the pressure sensor 118 may be configured to provide a measure of pressure of the pressurized fluid in the central region 103 over a range of pressures, and the media-isolating portion 109 may include a material that is less than 10% compressible over the range of pressures, which may be considered substantially incompressible. In other instances, the media-isolating portion 109 may include a material that is less than 5% compressible over the range of pressures, less than 1% compressible over the range of pressures, or less compressible as desired.

As pressurized media in the central region 103 impinges upon the inner surface 112 of the portion, the force of the pressurized media pushes (e.g., deforms) the media-isolating portion 109 outward. Because the media-isolating portion 109 is incompressible (or substantially incompressible), a substantial amount of the force on the inner surface 112 is translated to displacement on the outer surface 115, rather than being absorbed in the material of the media-isolating portion 109 itself. If the media-isolating portion 109 is appropriately dimensioned, and a suitable pressure sensor is employed, pressure may be accurately measured "through" the media-isolating portion 109.

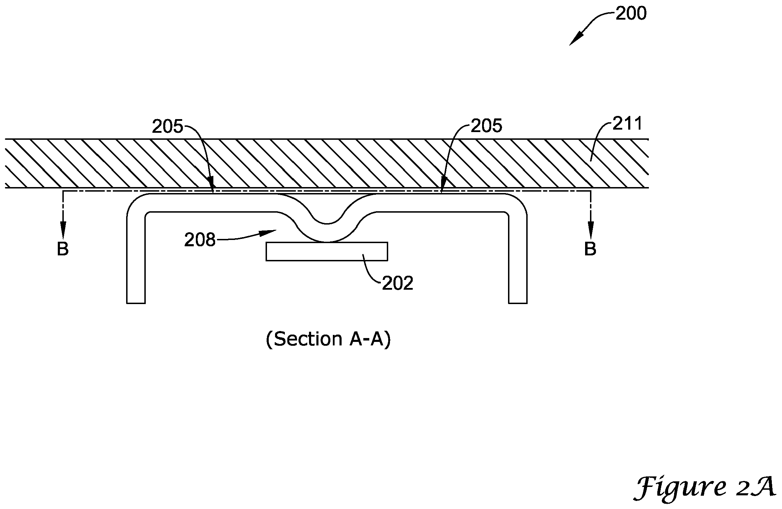

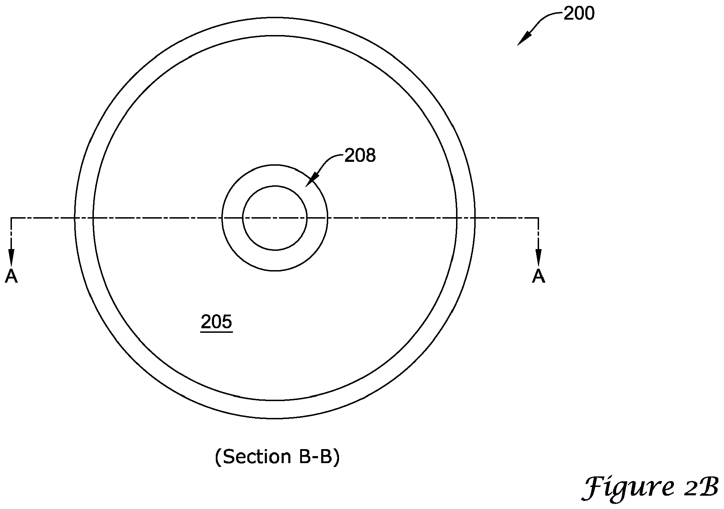

One suitable type of pressure sensor that can be employed is one that concentrates force from a sensing surface having a relatively larger surface area, to a pressure transducer having a relatively smaller surface area. To facilitate further description and explanation, such sensors may be referred to herein as "force concentrator sensors." An example of a force concentrator sensor is depicted in Figures 2A and 2B, and described in further detail in U.S. Patent 7,047,813, which is assigned to the assignee of this document. Note that only components of the example force concentrator sensor that are relevant to the present document are described; other components (e.g., a base, additional details of the housing, etc.) are omitted here for simplicity.

Figure 2A is a cross-section of an example force concentrator pressure sensor 200. Figure 2B is a top view of the example force concentrator sensor 200. As shown, the example sensor 200 includes three primary components: a pressure transducer 202, a pressure sensing face 205, and a force concentrating mechanism 208. Each component is now described in further detail.

The pressure transducer 202 can be any device that is capable of generating a signal that is representative of a mechanical stress applied to the pressure transducer 202. For example, the pressure transducer 202 could be a piezoresistive sensor that employs elements whose resistance changes in response to applied pressure (e.g., piezoresistors disposed in a Wheatstone bridge configuration on a silicon or ceramic diaphragm). As another example, the pressure transducer 202 could be a capactive sensor that employs one or more diaphragms and appropriate dielectric material in a configuration in which capacitance changes in response to applied pressure. As another example, the pressure transducer 202 could be a piezoelectric sensor that translates applied pressure directly into an electrical signal. As another example, the pressure transducer 202 could be a surface acoustic wave (SAW) sensor, whose acoustic wave propagation properties change in response to applied pressure. These are only examples, and it is contemplated that any suitable pressure transducer may be employed.

In some implementations, regardless of the type of pressure transducer 202 that is employed, circuitry (not shown) may be included to generate and/or condition a pressure-dependent electrical signal from the underlying pressure-dependent parameters (e.g., resistance, capacitance, acoustic properties, etc.) of the pressure transducer 202. Conditioning can include, for example, amplifying the signal, level-shifting the output, compensating for temperature and/or other variations, etc.

In the example shown, the pressure sensing face 205 can provide an interface between media to be measured and the pressure transducer 202. More specifically, a pressure to be measured can be applied to the relatively larger surface area of the sensing face 205 and transmitted to the relatively smaller surface area of the pressure transducer 202 by a force concentrating mechanism 208. As shown, one example force concentrating mechanism 208 is a dimple in the sensing face 205 that acts to translate force or pressure impinging on the sensing face 205 to the pressure transducer 202; other force concentrating arrangements are possible and contemplated.

In some implementations, pressurized media can be directly applied to the sensing face 205 of the force concentrating mechanism 208, and the pressure of that media can be measured. In other implementations, and as shown in Figure 2A, it may be desirable to further isolate the sensing face 205 from the pressurized media with a media-isolation layer 211. In such implementations, the sensing face 205 can be brought into contact with an appropriate media-isolation layer (e.g., a deformable, incompressible material, such as the media-isolating portion 109 of the channel wall 100 described above with reference to Figure 1). In implementations that employ a media-isolation layer 211, the media-isolation layer 211 can be in sufficiently intimate contact with the sensing face 205 that the media-isolation layer 211 impinges on a sufficient portion of the surface area of the sensing face 205 to enable the force concentrator sensor to measure pressure of the pressurized media through the media-isolation layer 211. In addition to contact over a sufficient portion of the surface area, the media-isolation layer 211 can be in a state of tension (e.g., positively deformed beyond an equilibrium state). For example, to ensure sufficiently intimate contact, the media-isolation layer 211 may be "pre-loaded" and configured to be in physical contact with a majority of the surface area of the sensing face 205 (e.g., more than 50% of the surface area of the sensing face 205), when the pressure sensor is at equilibrium (e.g., subjected to a minimum pressure), across a full range of temperatures.

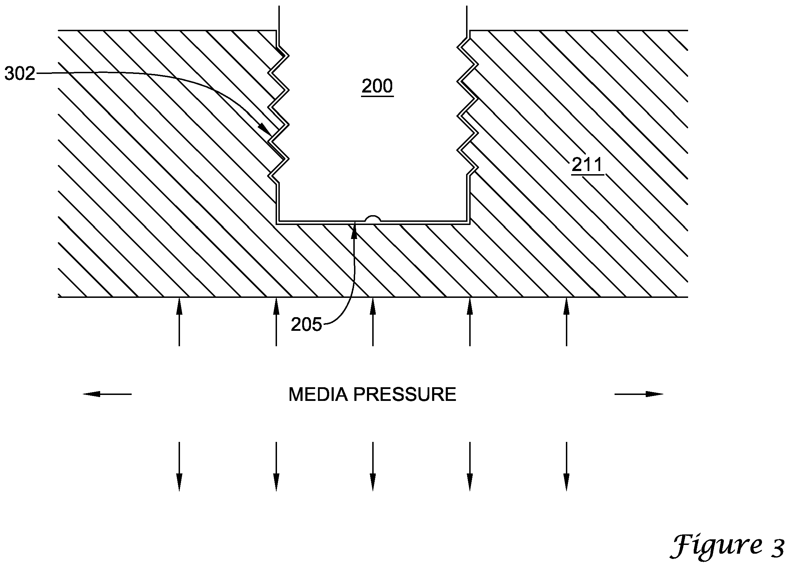

However the quality of contact between the sensing face 205 and the media-isolation layer 211 is quantified, good contact can result from the sensing face being positively forced into or against the media-isolation layer. The application of such a force positively deforms the isolation layer, beyond an equilibrium state, to a "pre-loaded" state of tension. Various mounting mechanisms can be employed to positively force the sensing face into the media-isolation layer; one example mounting mechanism is depicted in Figure 3.

Figure 3 provides a cross-section of an example mounting mechanism for positively forcing the sensing face 205 of a force concentrator sensor into a media-isolation layer, such that pressure of a pressurized media on the other side of the media-isolation layer 211 can be measured. In particular, Figure 3 illustrates complementary threads 302-on the force concentrator sensor 200 and in the media-isolation layer 211-that enable the sensing face 205 of the force concentrator sensor 200 to be pushed against the media-isolation layer 211 with varying degrees of force. More specifically, in the context of Figure 1, the threads enable the sensing face of the pressure sensor 118 to be pushed against the outer surface 115. With an appropriate force, the force concentrator sensor 200 can measure pressure of the pressurized media through the media-isolation layer 211 with sufficient sensitivity, and over a desirable range.

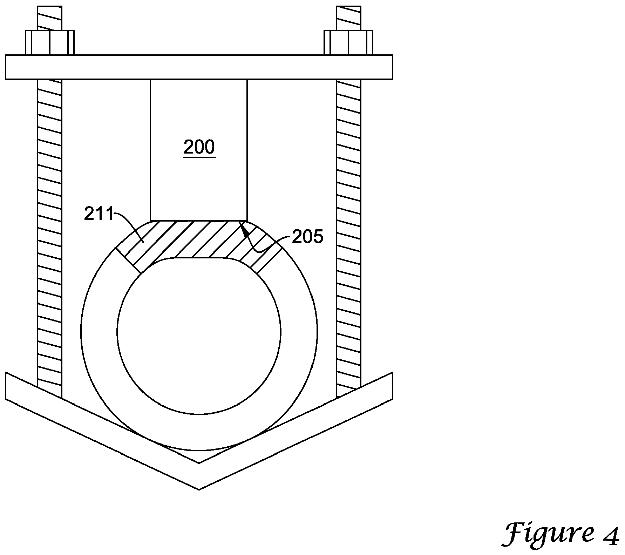

Other mounting mechanisms can be employed. For example, as depicted in a Figure 4, a clamp can be employed to force the sensing face 205 of a force concentrator pressure sensor against a portion of tubing (e.g., medical tubing). Whatever specific mounting mechanism is employed, the mechanism can apply an appropriate force (e.g., a preload force) to bring the force concentrator sensor and the media-isolation layer into sufficiently intimate contact.

Additional details of an example pressure sensing system are now described. In some implementations, it may be desirable to measure the pressure of a pressurized fluid or gas flowing through a pipe, without bringing the sensor into contact with the pressurized fluid or gas (e.g., because the fluid or gas is corrosive or subject to specific sanitary or sterility requirements). The pipe may be part of a larger system or network of pipes or tubes, with various valves and joints, some of which may employ deformable gaskets to seal the respective points on the system or network. Where such systems employ deformable gaskets that are also incompressible (or substantially incompressible), a pressure sensor, such as is described above, can be mounted in an existing gasket in order to measure pressure. Alternatively, a separate pipe section can be installed which includes an appropriate media-isolating portion, into which the pressure sensor can be mounted, and through which the pressure sensor can measure pressure.

A SAW sensor may be particularly suited for mounting in the above-referenced existing gasket or separate pipe section. One example SAW pressure sensor can employ the piezoelectric effect of quartz, and one or more interdigital transducers to convert between acoustic waves and electrical signals. More specifically, the pressure sensor can create an acoustic wave having a nominal frequency that is modulated by changes in pressure; the modulated frequency can be measured to provide a representation of the magnitude of the pressure. Appropriate circuitry can condition the signal to provide whatever output is desired (e.g., electrical output, radio frequency output, optical output, etc.).

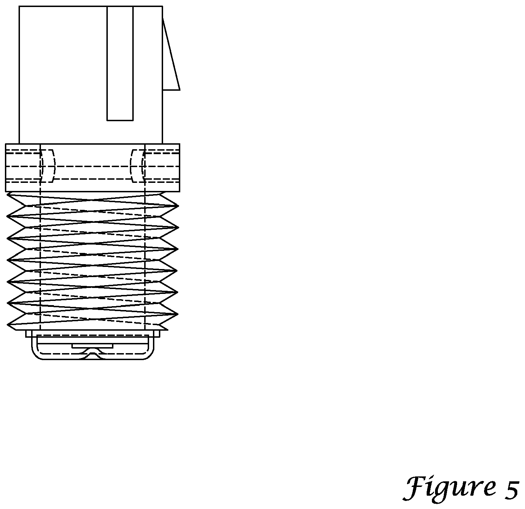

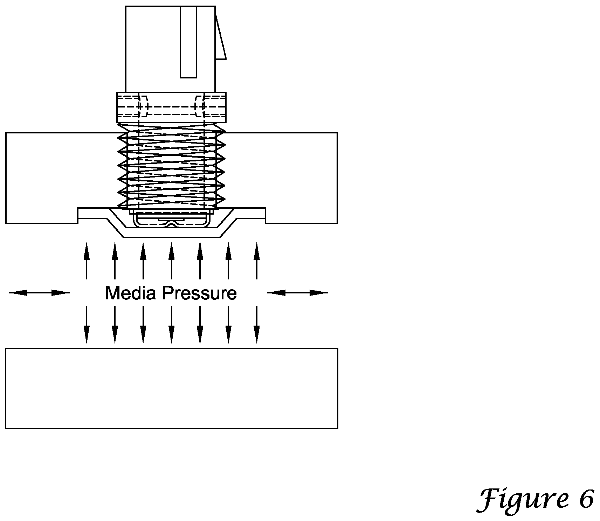

The sensor can be packaged in a threaded housing (see Figure 5), and a corresponding hole can be bored and threaded in an appropriate gasket in the system (see Figure 6). Figure 6 illustrates the positive force applied to the media-isolation layer, which causes the media-isolation layer to be positively deformed. That is, in the example depicted, the pressure sensor pushes against the media-isolation layer, thereby deforming it beyond an equilibrium state (e.g., a planar state in the example of Figure 6). As described above, the positive deformation of the media-isolation layer "pre-loads" or tensions the isolation layer, further ensuring intimate contact between the media-isolation layer and the sensor.

Note that relative to some implementations, Figure 6 illustrates an exaggerated level of deformation; the media-isolation layer need not be deformed to the extent illustrated. Further note that the example of Figure 6 illustrates a media-isolation membrane that is separate from (not integral to) the material through which the sensor is threaded. In other implementations (e.g., implementations like the one depicted in Figure 1), the sensor is threaded only partially through a unitary media-isolation material.

The sensor can be threaded into the gasket until the pressure sensor's sensing face is in sufficiently intimate contact with the bottom of the bored hole (analogous to the outer surface 115 that was illustrated in and described with reference to Figure 1). Because the bottom of the bored hole may not be smooth, sufficient pressure may be required to deform the material at the bottom of the hole, such that at least a threshold amount of the material is in contact with the sensing face. For example, it may be desirable for a majority (i.e., more than 50%) of the surface area of sensing face to be in contact with the media-isolation layer.

Because the exact nature of the surface of the media-isolation layer may not be known or predictable, it may be advantageous to employ an indirect method for determining whether a sufficiently intimate contact exists between the sensor and the media-isolation layer. In the case of the threaded SAW sensor described above, a (calibrated) sensor can be threaded into the media-isolation layer, and the sensor's own output can be used to determine when a threshold preload force is reached. An appropriate preload may be determined empirically, and may depend on the characteristics of the sensor, the media-isolation layer, and the topography of the portion of the media-isolation layer that contacts the sensing face of the pressure sensor.

The media-isolation layer itself can be any suitable material that is deformable and in some cases incompressible. For example, the material could be rubber, plastic, metal or a composite material. Alternatively, or in addition, the media-isolation layer may be made from two or more different materials. For example, the media-isolation layer could have a central region made from one material (e.g. metal) and a peripheral region made from another material (e.g. rubber). In general, the material or materials can be selected for compatibility with the media to be measured.

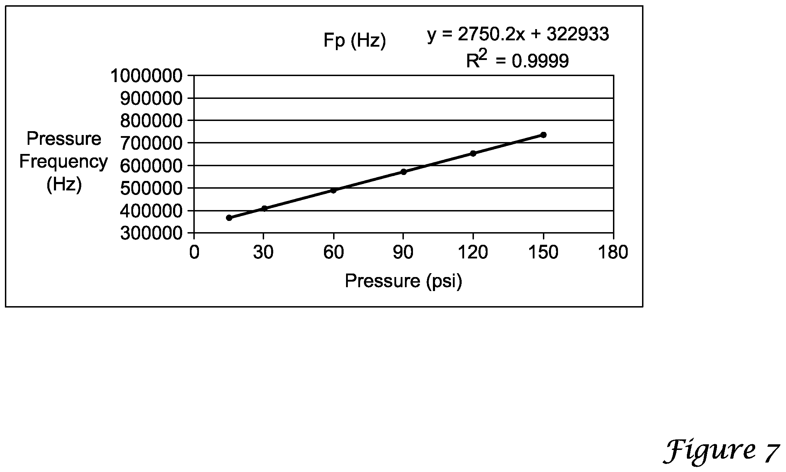

Example data for a system that employed a quartz SAW sensor mounted in a rubber gasket is provided in Figure 7. As shown, the system provided a substantially linear response over a pressure range from about 15 psi (pounds per square inch) to about 150 psi. That is, with a rubber-based media-isolation layer having an approximate thickness of 2.3 mm, and over the range indicated, the SAW sensor provided a frequency output that was substantially linearly correlated to pressure on the other side of the media-isolation layer.

One or more sensors, such as those that are described above, can be employed in various media-isolated applications. For example, such sensors can be employed to measure static pressure, dynamic pressure, or a combination of static pressure and dynamic pressure (e.g., a pressure having a static pressure component and a dynamic pressure component). The sensitivity and range in such applications may correspond to various design parameters associated with the pressure sensor itself, or to parameters such as the thickness of the media-isolation layer (specifically between the inner and outer surfaces identified with reference to Figure 1), the material or materials from which the media-isolation layer is constructed and its inherent properties (e.g., Durometer, Young's Modulus, pre-load amount, surface finishes of the sensing face and the outer surface, etc.). As such, these parameters and others can be optimized according to the specific application.

In addition to static and dynamic pressure measurements, multiple pressure sensors may be employed in a system to provide differential pressure information. Differential pressure information could, in turn, be used in some systems (e.g., channels or pipes) to calculate flow rates of pressurized media flowing therein.

A number of implementations have been described. Nevertheless, it will be understood that various modifications may be made without departing from the scope of this disclosure. Accordingly, other implementations are with the scope of the following claims.

## Claims

1. A system comprising:
a channel (100) comprising a central region (103) and an outer wall (106), the outer wall configured to contain a pressurized fluid within the central region (103), the outer wall (106) comprising a wall portion (109) that is deformable and incompressible and that has an inner surface (112) adjacent the central region (103) and an outer surface (115) that is fluidly isolated from the central region;
a pressure sensor (118; 200) comprising:
(a) a pressure transducer (202) that generates an electrical signal representative of a magnitude of mechanical stress applied to the pressure transducer, the pressure transducer (202) having a surface area;
(b) a pressure sensing face (205) having a surface area that is larger than the surface area of the pressure transducer (202); and
(c) a force concentrating mechanism (208) in contact with the pressure transducer (202) that is configured to translate force applied to the pressure sensing face (205) into mechanical stress on the pressure transducer (202);
and
a mounting mechanism (302) that is configured to push the pressure sensing face (205) into intimate contact with the outer surface (115) of the wall portion (109) and deform the wall portion (109) with the pressure sensing face (205), such that the electrical signal provides a measure that is related to a pressure of the pressurized fluid in the central region (103).

2. The system of claim 1, wherein the mounting mechanism (302) is configured to push the pressure sensing face (205) into intimate contact with the outer surface (115) of the wall portion (109) such that more than 50% of the surface area of the pressure sensing face (205) is in physical contact with the outer surface (115).

3. The system of claim 1, wherein the pressure sensor (118; 200) is a surface acoustic wave (SAW) sensor.

4. The system of claim 3 wherein the pressure sensor (118; 200) is a quartz SAW sensor.

5. The system of claim 1, wherein the electrical signal provides a measure that is related to a static pressure of the pressurized fluid in the central region (103) and a measure that is related to a dynamic pressure of the pressurized fluid in the central region (103).

6. The system of claim 1, wherein the force concentrating mechanism (208) is a dimple in the pressure sensing face (205).

7. The system of claim 6, wherein the mounting mechanism (302) comprises a clamp, wherein the clamp is configured such that more than 50% of the surface area of the pressure sensing face (205) to physically contact the outer surface (115).

8. The system of claim 6, wherein the pressure sensor (118; 200) is a surface acoustic wave (SAW) sensor.

9. The system of claim 8, wherein the pressure sensor (118; 200) is a quartz SAW sensor.

10. The system of claim 6, wherein the wall portion (109) includes silicone rubber .

11. The system of claim 6, wherein the system is configured to provide a measure of pressure of the pressurized fluid in the central region (103), and wherein the wall portion (109) includes a material that is less than 10% compressible.

12. The system of claim 11, wherein the system is configured to provide a measure of pressure of the pressurized fluid in the central region (103), and wherein the wall portion (109) includes a material that is less than 5% compressible.

13. The system of claim 12, wherein the system is configured to provide a measure of pressure of the pressurized fluid in the central region (103), and wherein the wall portion (109) includes a material that is less than 1% compressible.

## Patentansprüche

1. System, umfassend:
einen Kanal (100), der einen zentralen Bereich (103) und eine Außenwand (106) umfasst, wobei die Außenwand konfiguriert ist, um in dem zentralen Bereich (103) eine unter Druck stehende Flüssigkeit zu enthalten, wobei die Außenwand (106) einen Wandabschnitt (109) umfasst, der verformbar und nicht komprimierbar ist und der eine Innenseite (112) in der Nähe des zentralen Bereichs (103) und eine Außenseite (115) aufweist, die strömungstechnisch von dem zentralen Bereich isoliert ist;
einen Drucksensor (118; 200), der umfasst:
(a) einen Druckwandler (202), der ein elektrisches Signal erzeugt, das eine Größe einer mechanischen Spannung repräsentiert, die auf den Druckwandler ausgeübt wird, wobei der Druckwandler (202) einen Oberflächenbereich aufweist;
(b) eine Druckerfassungsseite (205), die einen Oberflächenbereich aufweist, der größer als der Oberflächenbereich des Druckwandlers (202) ist; und
(c) einen Kraftkonzentrationsmechanismus (208), der in einem Kontakt mit dem Druckwandler (202) steht und der konfiguriert ist, um eine Kraft, die auf die Druckerfassungsseite (205) ausgeübt wird, in eine mechanische Spannung auf den Druckwandler (202) umzuwandeln;
und
einen Montagemechanismus (302), der konfiguriert ist, um die Druckerfassungsseite (205) in einen engen Kontakt mit der Außenseite (115) des Wandabschnitts (109) zu drücken und den Wandabschnitt (109) mit der Druckerfassungsseite (205) so zu verformen, dass das elektrische Signal eine Messung bereitstellt, die zu einem Druck der unter Druck stehenden Flüssigkeit in dem zentralen Bereich (103) in Bezug steht.

2. System nach Anspruch 1, wobei der Montagemechanismus (302) konfiguriert ist, um die Druckerfassungsseite (205) in einen engen Kontakt mit der Außenseite (115) des Wandabschnitts (109) zu drücken, sodass mehr als 50 % des Oberflächenbereichs der Druckerfassungsseite (205) in einem physischen Kontakt mit der Außenwand (115) stehen.

3. System nach Anspruch 1, wobei der Drucksensor (118; 200) ein akustischer Oberflächenwellensensor (Surface Acoustic Wave sensor, SAW-Sensor) ist.

4. System nach Anspruch 3, wobei der Drucksensor (118; 200) ein Quarz-SAW-Sensor ist.

5. System nach Anspruch 1, wobei das elektrische Signal eine Messung bereitstellt, die in Bezug zu einem statischen Druck der unter Druck stehenden Flüssigkeit in dem zentralen Bereich (103) steht, und eine Messung bereitstellt, die in Bezug zu einem dynamischen Druck der unter Druck stehenden Flüssigkeit in dem zentralen Bereich (103) steht.

6. System nach Anspruch 1, wobei der Kraftkonzentrationsmechanismus (208) eine Vertiefung in der Druckerfassungsseite (205) ist.

7. System nach Anspruch 6, wobei der Montagemechanismus (302) eine Klemme umfasst, wobei die Klemme so konfiguriert ist, dass mehr als 50 % des Oberflächenbereichs der Druckerfassungsseite (205) in einem physischen Kontakt mit der Außenseite (115) stehen.

8. System nach Anspruch 6, wobei der Drucksensor (118; 200) ein akustischer Oberflächenwellensensor (Surface Acoustic Wave sensor, SAW-Sensor) ist.

9. System nach Anspruch 8, wobei der Drucksensor (118; 200) ein Quarz-SAW-Sensor ist.

10. System nach Anspruch 6, wobei der Wandabschnitt (109) Silikonkautschuk enthält.

11. System nach Anspruch 6, wobei das System konfiguriert ist, um eine Messung der unter Druck stehenden Flüssigkeit in dem zentralen Bereich (103) bereitzustellen, und wobei der Wandabschnitt (109) ein Material enthält, das weniger als 10 % komprimierbar ist.

12. System nach Anspruch 11, wobei das System konfiguriert ist, um eine Messung der unter Druck stehenden Flüssigkeit in dem zentralen Bereich (103) bereitzustellen, und wobei der Wandabschnitt (109) ein Material enthält, das weniger als 5 % komprimierbar ist.

13. System nach Anspruch 12, wobei das System konfiguriert ist, um eine Messung der unter Druck stehenden Flüssigkeit in dem zentralen Bereich (103) bereitzustellen, und wobei der Wandabschnitt (109) ein Material enthält, das weniger als 1 % komprimierbar ist.

## Revendications

1. Système comprenant :
un canal (100) comprenant une zone centrale (103) et une paroi externe (106), la paroi externe étant configurée pour maintenir un fluide sous pression à l'intérieur de la zone centrale (103), la paroi externe (106) comprenant une partie de paroi (109) qui est déformable et incompressible et dont la surface interne (112) est adjacente à la zone centrale (103) et la surface externe (115) est isolée vis-à-vis des fluides de la zone centrale,
un capteur de pression (118 ; 200) comprenant :
(a) un transducteur de pression (202) qui génère un signal électrique représentatif de l'amplitude de la contrainte mécanique appliquée sur le transducteur de pression, le transducteur de pression (202) comportant une zone de surface,
(b) une face de détection de pression (205) comportant une zone de surface qui est plus grande que la zone de surface du transducteur de pression (202), et
(c) un mécanisme de concentration de force (208) en contact avec le transducteur de pression (202), qui est configuré pour traduire la force appliquée sur la face de détection de pression (205) en une contrainte mécanique sur le transducteur de pression (202),
et
un mécanisme de montage (302) qui est configuré pour plaquer la face de détection de pression (205) en contact intime avec la surface externe (115) de la partie de paroi (109) et pour déformer la partie de paroi (109) avec la face de détection de pression (205) de sorte à ce que le signal électrique fournisse une mesure qui se rapporte à la pression du fluide sous pression dans la zone centrale (103).

2. Système selon la revendication 1, dans lequel le mécanisme de montage (302) est configuré pour plaquer la face de détection de pression (205) en contact intime avec la surface externe (115) de la partie de paroi (109) de sorte à ce que plus de 50 % de la zone de surface de la face de détection de pression (205) soit en contact physique avec la surface externe (115).

3. Système selon la revendication 1, dans lequel le capteur de pression (118 ; 200) est un capteur à onde acoustique de surface (SAW).

4. Système selon la revendication 3, dans lequel le capteur de pression (118 ; 200) est un capteur à onde SAW à quartz.

5. Système selon la revendication 1, dans lequel le signal électrique procure une mesure qui se rapporte à la pression statique du fluide sous pression dans la zone centrale (103) et une mesure qui se rapporte à la pression dynamique du fluide sous pression dans la zone centrale (103).

6. Système selon la revendication 1, dans lequel le mécanisme de concentration de force (208) est une alvéole dans la face de détection de pression (205).

7. Système selon la revendication 6, dans lequel le mécanisme de montage (302) comprend une pince, la pince étant configurée de sorte à ce que plus de 50 % de la zone de surface de la face de détection de pression (205) entre physiquement en contact avec la surface externe (115).

8. Système selon la revendication 6, dans lequel le capteur de pression (118 ; 200) est un capteur à onde acoustique de surface (SAW).

9. Système selon la revendication 8, dans lequel le capteur de pression (118 ; 200) est un capteur à onde SAW à quartz.

10. Système selon la revendication 6, dans lequel la partie de paroi (109) inclut un caoutchouc de silicone.

11. Système selon la revendication 6, le système étant configuré pour délivrer une mesure de pression du fluide sous pression dans la zone centrale (103), et dans lequel la partie de paroi (109) inclut un matériau qui est compressible à moins de 10 %.

12. Système selon la revendication 11, le système étant configuré pour délivrer une mesure de pression du fluide sous pression dans la zone centrale (103) et dans lequel la partie de paroi (109) inclut un matériau qui est compressible au moins de 5 %.

13. Système selon la revendication 12, le système étant configuré pour délivrer une mesure de pression du fluide sous pression dans la zone centrale (103), et dans lequel la partie de paroi (109) inclut un matériau qui est compressible au moins de 1 %.
